# EUROPEAN PATENT APPLICATION

(11) **EP 4 631 337 A1**
(43) Date of publication of application: **15.10.2025**
(21) Application number: 24219266.4
(22) Date of filing: 12.12.2024
(51) Int. Cl.: A01D 34/73, A01D 34/82

(54) **CUTTING UNIT AND LAWNMOWER**

(30) Priority: 27.02.2024 SE 2450230
(71) Applicant: Husqvarna AB, 561 82 Huskvarna (SE)
(72) Inventor: Svensson, Mats, Huskvarna (SE); Elderstiern, Jonas, Huskvarna (SE); Svensson, Pär-Ola, Huskvarna (SE)

(57) **Abstract**

A cutting unit (1) for a lawnmower (2) is disclosed. The cutting unit (1) comprises a cutting disc (3) configured to rotate around a rotation axis (Ax) during operation of the lawnmower (2) and a cutting member (4, 4') freely pivotably arranged on the cutting disc (3) around a pivot axis (Pa, Pa') between a cutting position and a retracted position. The cutting member (4, 4') is configured to assume the cutting position by the centripetal force acting on the cutting member (4, 4') upon rotation of the cutting disc (3) around the rotation axis (Ax). The cutting unit (1) comprises a stop assembly (5, 5') configured to stop pivoting movement of the cutting member (4, 4') when the cutting member (4, 4') reaches the retracted position. The angle between the cutting position and the retracted position is more than 180 degrees. The present disclosure further relates to a lawnmower (2) comprising a cutting unit (1).

## Description

### TECHNICAL FIELD

The present disclosure relates to a cutting unit for a lawnmower, wherein the cutting unit comprises a cutting disc configured to rotate around a rotation axis during operation of the lawnmower. The present disclosure further relates to a lawnmower comprising a cutting unit and a motor configured to rotate the cutting unit around a rotation axis during operation of the lawnmower.

### BACKGROUND

A lawnmower is a device designed to cut the grass of a lawn. Today's market offers various types of lawnmowers, including walk-behind mowers, riding mowers, and self-propelled robotic lawnmowers. Walk-behind mowers typically feature an extended handle that allows the user to push and steer the lawnmower. Some models are equipped with a propulsion system to help drive one or more wheels of the lawnmower, making the task easier. Walk-behind mowers without this feature are often called "push mowers." Riding mowers, on the other hand, include a seat for the operator, a steering mechanism like a wheel, and a motor to power the mower. Riding mowers are generally used for larger areas such as gardens, parks, sports fields, and golf courses.

A self-propelled robotic lawnmower is a mower capable of cutting grass in areas in an autonomous manner. Some robotic lawnmowers require a user to set up a border wire around a lawn that defines the area to be mowed. Such robotic lawnmowers use a sensor to locate the wire and thereby the boundary of the area to be trimmed. In addition to the wire, robotic lawnmowers may also comprise other types of positioning units and sensors, for example sensors for detecting an event, such as a collision with an object within the area. The robotic lawnmower may move in a systematic and/or random pattern to ensure that the area is completely cut. A robotic lawnmower usually comprises one or more batteries and one or more electrically driven cutting units being powered by the one or more batteries. In some cases, the robotic lawnmower uses the wire to locate a recharging dock used to recharge the one or more batteries. Generally, robotic lawnmowers operate unattended within the area in which they operate. Examples of such areas are lawns, gardens, parks, sports fields, golf courses and the like.

Traditionally, lawnmowers have been equipped with a fixed cutting arm that has sharp cutting edges, with the arm rotating around an axis powered by a motor of the lawnmower. However, advancements have led to the development of cutting units that comprises a cutting disc and a number of cutting members pivotally arranged on the cutting disc. The cutting disc is designed to rotate around a central axis, with the cutting members moving into radial cutting positions due to the centripetal force generated during rotation. This design is especially common in robotic lawnmowers, offering the benefit of reduced energy consumption for cutting tasks. Additionally, this type of cutting unit is considered safer than the fixed arm models, as the pivoting members can move away upon hitting a hard object.

Normally, there is a trade-off between the attainable cutting efficiency of a cutting unit and safety and durability of the cutting unit. That is, if the cutting unit is designed to have a high impact energy, such as an impact energy exceeding 5 Joules, a high cutting efficiency can be obtained, which can be advantageous when cutting tall grass. However, if such a cutting unit is moved towards a hard object, such as a stone or a metal rod protruding from a lawn, it is more likely to become damaged and is more likely to damage the object, than a cutting unit having a lower impact energy.

Moreover, when a cutting unit approaches a hard object, its cutting members will repeatedly strike against the hard object. These repeated collisions between a cutting member and a hard object can lead to large pieces of the cutting members breaking off and being ejected from the cutting unit. This situation poses a potential risk as these detached parts could strike people or animals nearby. Additionally, repeating impacts between a cutting member and a hard object can cause considerable harm to both the cutting member and the object itself, greatly diminishing the cutting member's efficiency. As a result of such incidents, one or more cutting members of the cutting unit typically need to be replaced to maintain performance of the cutting unit.

Moreover, predicting the pivoting angles of the cutting members are very difficult upon repeated impacts against a hard object. This unpredictability arises because they pivot upon impact and may rotate multiple times before striking the object again. Additionally, the random nature of these impacts means there's a chance a cutting member might be oriented at an angle where it gets jammed against the hard object, preventing the cutting disc from rotating. When this occurs, the cutting member often suffers severe damage, breaks into pieces, or becomes detached from the cutting disc.

Furthermore, generally, it is an advantage if products, such as lawnmowers and associated components, systems, and arrangements, have conditions and/or characteristics suitable for being manufactured and assembled in a cost-efficient manner.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a cutting unit for a lawnmower, wherein the cutting unit comprises a cutting disc configured to rotate around a rotation axis during operation of the lawnmower and a cutting member freely pivotably arranged on the cutting disc around a pivot axis between a cutting position and a retracted position, wherein the cutting member is configured to assume the cutting position by the centripetal force acting on the cutting member upon rotation of the cutting disc around the rotation axis, wherein the cutting unit comprises a stop assembly configured to stop pivoting movement of the cutting member when the cutting member reaches the retracted position, and wherein the angle between the cutting position and the retracted position is more than 180 degrees.

Thereby, a cutting unit is provided having conditions for avoiding repeated impacts between the cutting member and a hard object, such as a stone or a metal rod protruding from a ground surface. This is because the cutting unit comprises the stop assembly and because the angle between the cutting position and the retracted position is more than 180 degrees. These features can ensure that the cutting member remains in the retracted position by the centripetal force acting on the cutting member if the cutting member is moved to the retracted position during rotation of the cutting disc around the rotation axis.

That is, in more detail, if the cutting member impacts a hard object, it is highly likely that the cutting member is pivoted from the cutting position to the retracted position by the impact energy imparted to the cutting member. Since the cutting unit comprises the stop assembly, and since the angle between the cutting position and the retracted position is more than 180 degrees, it can be ensured that the cutting member remains in the retracted position by the centripetal force acting on the cutting member upon rotation of the cutting disc around the rotation axis. Accordingly, in this manner, repeated impacts between the cutting member and the hard object are avoided.

As a further result, a cutting unit is provided having conditions for using a high impact energy, and thereby a high cutting efficiency, while avoiding damage of the cutting member and external objects caused by repeated impacts between the cutting member and external objects.

Moreover, by preventing repeated impacts between the cutting member and hard objects, the design allows the use of harder materials for the cutting member without risking breakage of the cutting member. A harder material can ensure longer maintenance of sharpness of a cutting edge of the cutting member, enhancing the cutting efficiency and longevity of the cutting member, as compared to a softer material.

Accordingly, a cutting unit is provided overcoming, or at least alleviating, at least some of the above-mentioned problems and drawbacks. As a result, the above-mentioned object is achieved.

Optionally, the centre of mass of the cutting member is located outside of a peripheral edge of the cutting disc when the cutting member is in the cutting position, and is located inside of the peripheral edge of the cutting disc when the cutting member is in the retracted position. Thereby, it can be further ensured that repeated impacts between the cutting member and external objects are avoided while providing conditions for a high cutting efficiency of the cutting unit.

Optionally, the centre of mass of the cutting member passes a line extending between the rotation axis and the pivot axis when the cutting member is pivoted from the cutting position to the retracted position. Thereby, it can be further ensured that the cutting member remains in the retracted position by the centripetal force acting on the cutting member if the cutting member is moved to the retracted position upon rotation of the cutting disc around the rotation axis.

Optionally, the angle between the cutting position and the retracted position is within the range of 182 - 235 degrees or is within the range of 185 - 225 degrees. Thereby, it can be further ensured that the cutting member remains in the retracted position by the centripetal force acting on the cutting member if the cutting member is moved to the retracted position upon rotation of the cutting disc around the rotation axis. Moreover, a cutting unit is provided having conditions for reliably pivoting the cutting member to the cutting position upon startup of rotation of the cutting unit.

Optionally, the stop assembly comprises a stop element arranged on the cutting disc at a distance from the pivot axis of the cutting member, and wherein the stop assembly is configured to stop pivoting movement of the cutting member when the cutting member reaches the retracted position by an abutting contact between the stop element and a first portion of the cutting member. Thereby, an efficient and structurally simple stop assembly is provided capable of reducing occurrences of repeated impacts between the cutting member and a hard object. Due to the structurally simple stop assembly, a cutting unit is provided having conditions and characteristics suitable for being manufactured and assembled in a cost-efficient manner.

Optionally, the cutting member is freely pivotably arranged around the pivot axis between the cutting position and a forwardly inclined position, and wherein the stop assembly is configured to stop pivoting movement of the cutting member when the cutting member reaches the forwardly inclined position. Thereby, a cutting unit is provided having conditions for avoiding situations in which the cutting member gets jammed against a hard object in a manner preventing further rotation of the cutting disc. As a further result, severe damage of the cutting member and of the cutting disc can be avoided.

Optionally, the angle between the cutting position and the forwardly inclined position is within the range of 3 - 25 degrees or is within the range of 10 - 20 degrees. Thereby, cutting unit is provided having improved conditions for avoiding situations in which the cutting member gets jammed against a hard object in a manner preventing further rotation of the cutting disc.

Optionally, the stop assembly is configured to stop pivoting movement of the cutting member when the cutting member reaches the forwardly inclined position by an abutting contact between the stop element and a second portion of the cutting member. Thereby, an efficient and structurally simple stop assembly is provided capable of reducing occurrences of repeated impacts between the cutting member and a hard object as well as occurrences of jamming of the cutting member against a hard object in a manner preventing further rotation of the cutting disc.

According to a second aspect of the present disclosure, the object is achieved by a lawnmower comprising a cutting unit according to the first aspect of the invention and a motor configured to rotate the cutting unit around the rotation axis during operation of the lawnmower.

Thereby, a lawnmower is provided comprising a cutting unit having conditions for avoiding repeated impacts between the cutting member and a hard object, such as a stone or a metal rod protruding from a ground surface. As a further result, a lawnmower is provided having conditions for using a high impact energy of the cutting unit, and thereby a high cutting efficiency, while avoiding damage of the cutting member and external objects caused by repeated impacts between the cutting member and external objects. Moreover, by preventing repeated impacts between the cutting member and external objects, the design allows the use of harder materials for the cutting member without risking breakage of the cutting member.

Accordingly, a lawnmower is provided overcoming, or at least alleviating, at least some of the above-mentioned problems and drawbacks. As a result, the above-mentioned object is achieved.

Optionally, the lawnmower is a self-propelled robotic lawnmower. Thereby, self-propelled robotic lawnmower is provided having at least some of the above-mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a lawnmower according to some embodiments of the present disclosure,
Fig. 2 illustrates a perspective view of a cutting unit of the lawnmower illustrated in Fig. 1,
Fig. 3 illustrates a first view of an operating example of the cutting unit of the lawnmower illustrated in Fig. 1,
Fig. 4 illustrates a second view of the operating example of the cutting unit illustrated in Fig. 3,
Fig. 5 illustrates a third view of the operating example of the cutting unit illustrated in Fig. 3 and Fig. 4,
Fig. 6 illustrates a cross section of a portion of the cutting unit according to the embodiments illustrated in Fig. 2 - Fig. 5,
Fig. 7 illustrates the cutting unit according to the embodiments illustrated in Fig. 2 - Fig. 6 in which a first cutting member has been pivoted to a forwardly inclined position, and
Fig. 8 illustrates an operating example of a prior art cutting unit.

### DETAILED DESCRIPTION

Aspects of the present disclosure will now be described more fully. Like reference signs refer to like elements throughout. Well-known functions or constructions will not necessarily be described in detail for brevity and/or clarity.

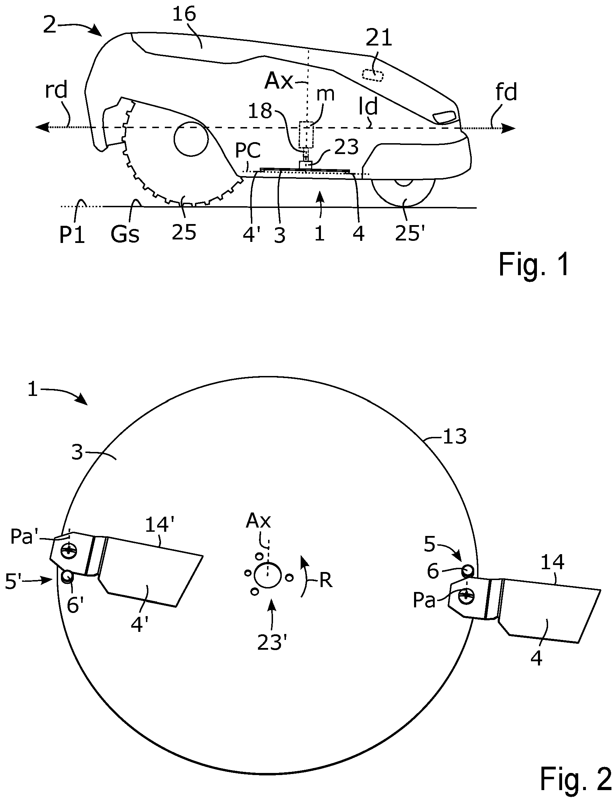

**Fig. 1** schematically illustrates a lawnmower 2 according to some embodiments of the present disclosure. According to the illustrated embodiments, the lawnmower 2 is a self-propelled autonomous robotic lawnmower 2 capable of navigating and cutting grass in an autonomous manner in an area without the intervention or the control of a user. For reasons of brevity and clarity, the self-propelled autonomous robotic lawnmower 2 is in some places herein referred to as "the robotic lawnmower 2" or simply the "lawnmower 2".

According to further embodiments, the lawnmower 2 may be another type of lawnmower, such as a walk-behind mower or a push mower. According to the embodiments herein, the lawnmower 2 is a small or mid-sized lawnmower 2 configured to be used to cut grass in areas used for aesthetic and recreational purposes, such as gardens, parks, city parks, sports fields, lawns around houses, apartments, commercial buildings, offices, and the like.

The lawnmower 2 comprises a lawnmower body 16 and a number of lawnmower support members 25, 25' each configured to abut against a ground surface Gs in a first plane P1 during operation of the lawnmower 2 to support the lawnmower body 16. The lawnmower body 16, as referred to herein, may also be referred to as a lawnmower chassis. Accordingly, the first plane P1 will extend along a ground surface Gs when the lawnmower 2 is positioned on a flat ground surface Gs.

According to the illustrated embodiments, the lawnmower support members 25, 25' is wheels 25, 25' of the lawnmower 2. According to the illustrated embodiments, the lawnmower 2 comprises four wheels 25, 25', namely two drive wheels 25 and two support wheels 25'. The drive wheels 25 of the lawnmower 2 may each be powered by an electrical motor of the lawnmower 2 to provide motive power and/or steering of the lawnmower 2. In Fig. 1, a longitudinal direction Id of the lawnmower 2 is indicated. The longitudinal direction Id of the lawnmower 2 is parallel to the first plane P1 and thus also to a ground surface Gs when the lawnmower 2 is positioned onto a flat ground surface Gs. Moreover, the longitudinal direction Id of the lawnmower 2 is parallel to a forward direction fd of travel of the lawnmower 2 as well as a reverse direction rd of travel of the lawnmower 2.

According to the illustrated embodiments, the drive wheels 25 of the lawnmower 2 are non-steered wheels having a fix rolling direction in relation to the lawnmower body 16. The respective rolling direction of the drive wheels 25 of the lawnmower 2 is substantially parallel to the longitudinal direction Id of the lawnmower 2. According to the illustrated embodiments, the support wheels 25' are non-driven wheels. Moreover, according to the illustrated embodiments, the support wheels 25' can pivot around a respective pivot axis such that the rolling direction of the respective support wheel 6' can follow a travel direction of the lawnmower 2.

As understood from the above, when the drive wheels 25 of the lawnmower 2 are rotated at the same rotational velocity in a forward rotational direction, and no wheel slip is occurring, the lawnmower 2 will move in the forward direction fd indicated in Fig. 1. Likewise, when the drive wheels 25 of the lawnmower 2 are rotated at the same rotational velocity in a reverse rotational direction, and no wheel slip is occurring, the lawnmower 2 will move in the reverse direction rd indicated in Fig. 1. The reverse direction rd is opposite to the forward direction fd.

According to the illustrated embodiments, the lawnmower 2 may be referred to as a four-wheeled rear wheel driven lawnmower 2. According to further embodiments, the lawnmower 2 may be provided with another number of wheels 25, 25', such as three wheels. Moreover, according to further embodiments, the lawnmower 2 may be provided with another configuration of driven and non-driven wheels, such as a front wheel drive or an all-wheel drive.

According to the illustrated embodiments, the lawnmower 2 comprises a control arrangement 21. The control arrangement 21 may be configured to control propulsion of the lawnmower 2, and steer the lawnmower 2, by controlling electrical motors of the lawnmower 2 arranged to drive the drive wheels 25 of the lawnmower 2. According to further embodiments, the control arrangement 21 may be configured to steer the lawnmower 2 by controlling the angle of steered wheels of the lawnmower 2. According to still further embodiments, the robotic lawnmower may be an articulated robotic lawnmower, wherein the control arrangement 21 may be configured to steer the robotic lawnmower by controlling the angle between frame portions of the articulated robotic lawnmower.

The control arrangement 21 may be configured to control propulsion of the lawnmower 2, and steer the lawnmower 2, so as to navigate the lawnmower 2 in an area to be operated. The lawnmower 2 may further comprise one or more sensors arranged to sense a magnetic field of a wire, and/or one or more positioning units, and/or one or more sensors arranged to detect an impending or ongoing collision event with an object. In addition, the lawnmower 2 may comprise a communication unit connected to the control arrangement 21. The communication unit may be configured to communicate with a remote communication unit to receive instructions therefrom and/or to send information thereto. The communication may be performed wirelessly over a wireless connection such as the internet, or a wireless local area network (WLAN), or a wireless connection for exchanging data over short distances using short-wavelength, i.e. ultra-high frequency (UHF) radio waves in the industrial, scientific, and medical (ISM) band from 2.4 to 2.486 GHz.

The control arrangement 21 may be configured to control propulsion of the lawnmower 2, and steer the lawnmower 2, so as to navigate the lawnmower 2 in a systematic and/or random pattern to ensure that an area is completely covered, using input from one or more of the above described sensors and/or units. Furthermore, the lawnmower 2 may comprise one or more batteries arranged to supply electricity to components of the lawnmower 2. As an example, the one or more batteries may be arranged to supply electricity to electrical motors of the lawnmower 2 by an amount controlled by the control arrangement 21.

The lawnmower 2 comprises a cutting unit 1. As is further explained herein, the cutting unit 1 comprises a cutting disc 3 and a number of cutting members 4, 4' pivotally arranged on the cutting disc 3. The lawnmower 2 further comprises a motor m configured to rotate the cutting unit 1 around a rotation axis Ax. According to the illustrated embodiments, the motor m is an electric motor. According to further embodiments, the lawnmower 2 may comprise another type of motor for rotating the cutting unit 1, such as an internal combustion engine.

Moreover, according to the illustrated embodiments, the cutting unit 1 is attached to an output shaft 18 of the motor m via an attachment member 23. According to the illustrated embodiments, the attachment member 23 and the cutting unit 1 are arranged to rotate with the output shaft 18 of the motor m. However, according to further embodiments, the lawnmower 2 may comprise a transmission assembly between the output shaft 18 of the motor m and the cutting unit 1. Such a transmission assembly may comprise one or more of gearing and a belt and pulley arrangement.

Moreover, according to the embodiments illustrated in Fig. 1, the lawnmower 2 is illustrated as comprising one cutting unit 1. However, the lawnmower 2 may comprise more than one cutting unit 1.

As indicated in Fig. 1, the cutting unit 3 is configured to rotate in a cutting plane PC around the rotation axis Ax. The rotation axis Ax is perpendicular to the cutting plane PC. According to the illustrated embodiments, the cutting plane PC is substantially parallel to the first plane P1. However, according to embodiments herein, an angle between the cutting plane PC and the first plane P1 may be less than 10 degrees or less than 7 degrees.

**Fig. 2** illustrates a perspective view of the cutting unit 1 of the lawnmower 2 illustrated in Fig. 1. Below, simultaneous reference is made to Fig. 1 and Fig. 2, if not indicated otherwise. In Fig. 2, a centrally arranged mounting portion 23' of the cutting unit 1 is indicated. The centrally arranged mounting portion 23' comprises a number of through holes each configured to receive a fastening element, such as a screw, for attaching the mounting portion 23' of the cutting unit 1 to the attachment member 23 of the lawnmower 2.

As mentioned, the cutting unit 1 comprises a cutting disc 3 and a number of cutting members 4, 4'. Each of the number of cutting members 4, 4' is freely pivotably arranged on the cutting disc 3 around a pivot axis Pa, Pa' between a cutting position and a retracted position. The feature that a cutting member 4, 4' is freely pivotably arranged on the cutting disc 3 around a pivot axis Pa, Pa' means that the cutting unit 1 comprises no further arrangement affecting pivoting movement of the cutting member 4, 4' between the cutting position and the retracted position than a pivot joint attaching the cutting member 4, 4' to the cutting disc 3.

As is clearly seen in Fig. 2, according to the illustrated embodiments, the cutting unit 1 comprises two cutting members 4, 4'. These are in some places herein referred to as a first cutting member 4 and a second cutting member 4'. However, according to further embodiments, the cutting unit 1 may comprise another number of cutting members 4, 4', such as three, four, or five cutting members.

In Fig. 2, the first cutting member 4 is illustrated in a cutting position and the second cutting member 4' is illustrated in a retracted position. Moreover, in Fig. 2 a rotational direction R of the cutting unit 1 is indicated. The motor m of the lawnmower 2 is configured to rotate the cutting unit 1 in the rotational direction R around the rotation axis Ax during operation of the lawnmower 2.

A cutting edge 14 of the first cutting member 4 is indicated in Fig. 2. The cutting edge 14 forms a trailing edge of the first cutting member 4 when the first cutting member 4 is in the cutting position and the cutting unit 1 is rotated in the rotational direction R around the rotation axis Ax. Moreover, as seen in Fig. 2, the cutting unit 1 is configured such that the cutting edge 14 of the first cutting member 4 is located outside of a peripheral edge 13 of the cutting disc 3 when the first cutting member 4 is in the cutting position. A cutting edge 14' of the second cutting member 4' is also indicated in Fig. 2. As can be seen in Fig. 2, the cutting edge 14' of the second cutting member 4' is located inside the peripheral edge 13 of the cutting disc 3 when the second cutting member 4' is in the retracted position.

According to the illustrated embodiments, a radial distance from the rotation axis Ax to the pivot axis Pa of the first cutting member 4 is the same as the radial distance between the rotation axis Ax and the pivot axis Pa' of the second cutting member 4'. Moreover, according to the illustrated embodiments, the first and second cutting members 4, 4' are identical.

Accordingly, in summary, according to the illustrated embodiments, the cutting unit 1 is configured such that the cutting edge 14, 14' of a cutting member 4, 4' is located outside of the peripheral edge 13 of the cutting disc 3 when the cutting member 4, 4' is in the cutting position and such that the cutting edge 14, 14' of a cutting member 4, 4' is located inside of the peripheral edge 13 of the cutting disc 3 when the cutting member 4, 4' is in the retracted position.

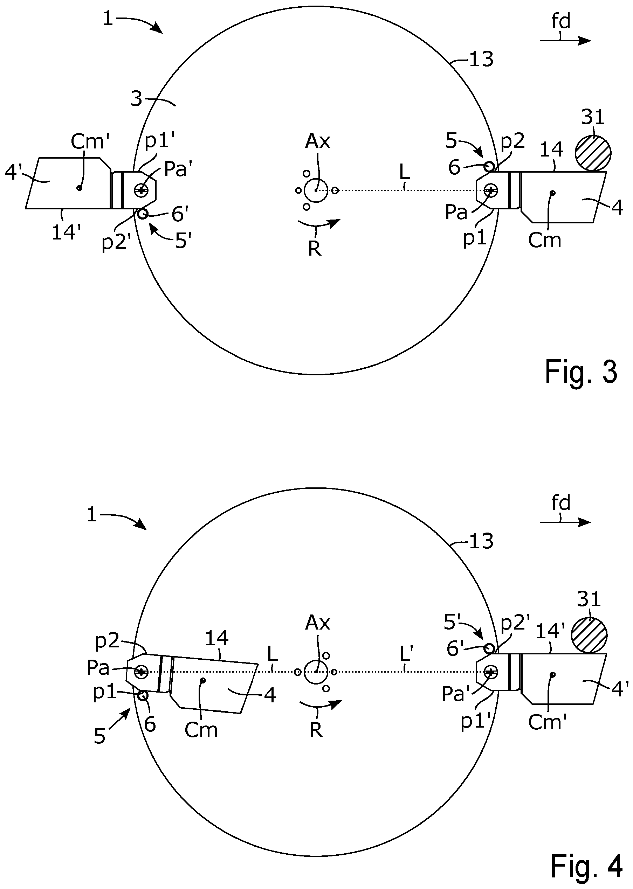

**Fig. 3** illustrates a first view of an operating example of the cutting unit 1 of the lawnmower 2 illustrated in Fig. 1. In Fig. 3, the cutting unit 1 is illustrated as seen in a direction coinciding with the rotation axis Ax of the cutting unit 1. Below, simultaneous reference is made to Fig. 1 - Fig. 3, if not indicated otherwise.

In the operating example of Fig. 3, the cutting unit 1 is rotated in the rotational direction R around the rotation axis Ax by the motor m of the lawnmower 2 at a set rotational speed. The lawnmower 2 may be configured such that the motor m rotates the cutting unit 1 at the set rotational speed upon operation of the lawnmower 2. The set rotational speed of the cutting unit 1 may for example be within the range of 1 000 - 4 000 rpm or may be within the range of 2 000 - 3 000 rpm.

The cutting unit 1 is configured such that the cutting members 4, 4' of the cutting unit 1 assume the respective cutting position by the centripetal force acting on the cutting member 4, 4' upon rotation of the cutting disc 3 around the rotation axis Ax. In Fig. 3, a centre of mass Cm, Cm' of the cutting members 4, 4' are indicated. As seen in Fig. 3, the centre of mass Cm, Cm' of a cutting member 4, 4' is located outside of the peripheral edge 13 of the cutting disc 3 when the cutting member 4, 4' is in the cutting position.

The feature that a cutting member 4, 4' of the cutting unit 1 is configured to assume the cutting position by the centripetal force acting on the cutting member 4, 4' upon rotation of the cutting disc 3 around the rotation axis Ax may also be expressed as that the cutting member 4, 4' is configured to assume the cutting position by the inertia of the cutting member 4, 4' upon rotation of the cutting unit 1 around the rotation axis Ax.

In Fig. 3, the forward moving direction fd of the lawnmower 2 is indicated. Moreover, in Fig. 3, a hard object 31 is illustrated. The hard object 31 may for example be a metal rod. In Fig. 3, the hard object 31 is illustrated at a position at which the first cutting member 4 of the cutting unit 1 is impacting the hard object 31.

**Fig. 4** illustrates a second view of the operating example of the cutting unit 1 illustrated in Fig. 3. In Fig. 4, the cutting unit 1 has been rotated half a turn, i.e., 180 degrees, in the rotational direction R from the rotational position illustrated in Fig. 3.

As seen in Fig. 4, the first cutting member 4 has been pivoted around the pivot axis Pa from the cutting position illustrated in Fig. 3 to a retracted position by the impact energy between the first cutting member 4 and the hard object 31 during the impact illustrated in Fig. 3.

As can be seen when comparing Fig. 3 and Fig. 4, the first cutting member 4 is configured to pivot around the pivot axis Pa in a pivoting direction being opposite to the rotational direction R of the cutting disc 3 upon pivoting from the cutting position illustrated in Fig. 3 to the retracted position illustrated in Fig. 4.

According to embodiments herein, the cutting unit 1 comprises a stop assembly 5 configured to stop pivoting movement of the first cutting member 4 when the first cutting member 4 reaches the retracted position. The stop assembly 5 may also be referred to as a first stop assembly 5, a stop assembly 5 of the first cutting member 4, or a stop assembly 5 for the first cutting member 4.

Moreover, as can be seen when comparing Fig. 3 and Fig. 4, the angle between the cutting position and the retracted position is more than 180 degrees. In other words, the first cutting member 4 is turning more than 180 degrees relative to the cutting disc 3 when pivoting from the cutting position illustrated in Fig. 3 to the retracted position illustrated in Fig. 4. As is further explained herein, in this manner, repeated impacts between the first cutting member 4 and the hard object 31 can be avoided.

In the second view of Fig. 4, the second cutting member 4' is located at a position at which the second cutting member 4' impacts the hard object 31.

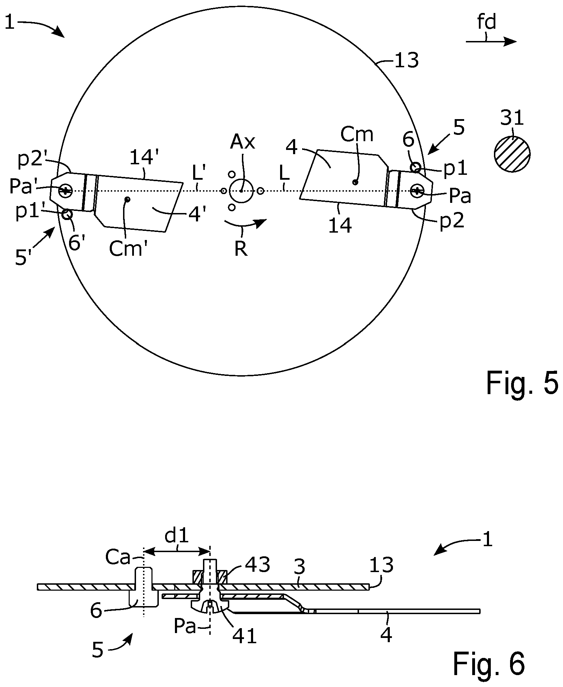

**Fig. 5** illustrates a third view of the operating example of the cutting unit 1 illustrated in Fig. 3 and Fig. 4. In Fig. 5, the cutting unit 1 has been rotated half a turn, i.e., 180 degrees, in the rotational direction R from the rotational position illustrated in Fig. 4.

As seen in Fig. 5, the second cutting member 4' has been pivoted around the pivot axis Pa' from the cutting position illustrated in Fig. 4 to a retracted position by the impact energy between the second cutting member 4' and the hard object 31 during the impact illustrated in Fig. 4.

According to embodiments herein, the cutting unit 1 comprises a stop assembly 5' configured to stop pivoting movement of the second cutting member 4' when the second cutting member 4' reaches the retracted position. The stop assembly 5' may also be referred to as a second stop assembly 5', a stop assembly 5' of the second cutting member 4', or a stop assembly 5' for the second cutting member 4'.

Moreover, as is evident from Fig. 5, no impact occurs between the first cutting member 4 and the hard object 31 because the first cutting member 4 is in the retracted position. Moreover, upon continued rotation of the cutting unit 1 around the rotation axis Ax, no impacts between cutting member 4, 4' and the hard object 31 will occur because each cutting member 4, 4' of the cutting unit 1 is in the respective retracted position.

Accordingly, in this manner, a cutting unit 1 is provided having conditions for avoiding repeated impacts between the cutting members 4, 4' and a hard object 31, such as a stone or a metal rod protruding from a ground surface. This is because the cutting unit 1 comprises the stop assemblies 5, 5' and because the angle between the cutting position and the retracted position is more than 180 degrees. These features can ensure that the cutting members 4, 4' remains in the retracted position by the centripetal force acting on the cutting members 4, 4' if the cutting members 4, 4' is moved to the retracted position during rotation of the cutting disc 3 around the rotation axis Ax.

That is, in more detail, if the cutting members 4, 4' impacts a hard object 31, it is highly likely that the cutting members 4, 4' are pivoted from their cutting position to their retracted position by the impact energy imparted to the cutting members 4, 4'. Since the cutting unit 1 comprises the stop assemblies 5, 5', and since the angle between the cutting position and the retracted position is more than 180 degrees, it can be ensured that the cutting members 4, 4' remains in the retracted position by the centripetal force acting on the cutting members 4, 4' upon continued rotation of the cutting disc 3 around the rotation axis Ax. Accordingly, in this manner, repeated impacts between the cutting members 4, 4' and the hard object 31 are avoided.

As a further result, a cutting unit 1 is provided having conditions for using a high impact energy, and thereby a high cutting efficiency, while avoiding damage of the cutting members 4, 4' and external objects 31 caused by repeated impacts between the cutting members 4, 4' and external objects 31.

Moreover, by preventing repeated impacts between the cutting members 4, 4' and hard objects 31, the design allows the use of harder materials for the cutting members 4, 4' without risking breakage of the cutting members 4, 4'. A harder material can ensure longer maintenance of sharpness of a cutting edge 14, 14' of the cutting members 4, 4', enhancing the cutting efficiency and longevity of the cutting members 4, 4', as compared to a softer material.

As can be seen when comparing Fig. 3 and Fig. 4, the centre of mass Cm of the first cutting member 4 passes a line L extending between the rotation axis Ax and the pivot axis Pa of the first cutting member 4 when the first cutting member 4 is pivoted from the cutting position illustrated in Fig. 3 to the retracted position illustrated in Fig. 4.

Likewise, as can be seen when comparing Fig. 4 and Fig. 5, the centre of mass Cm' of the second cutting member 4' passes a line L' extending between the rotation axis Ax and the pivot axis Pa' of the second cutting member 4' when the second cutting member 4' is pivoted from the cutting position illustrated in Fig. 4 to the retracted position illustrated in Fig. 5.

Thereby, it can be further ensured that the cutting members 4, 4' remains in the respective retracted position by the centripetal force acting on the cutting member 4, 4' if the cutting member 4, 4' is moved/pivoted to the retracted position upon rotation of the cutting disc 3 around the rotation axis Ax.

According to the illustrated embodiments, the angle between the cutting position and the retracted position of each of the first and second cutting members 4, 4' is approximately 185 degrees. This means that the respective cutting member 4, 4' is turned 185 degrees relative to the cutting disc 3 when pivoting from the cutting position to the retracted position. According to further embodiments, the angle between the cutting position and the retracted position of each of the first and second cutting members 4, 4' may be within the range of 182 - 235 degrees or may be within the range of 185 - 225 degrees.

**Fig. 6** illustrates a cross section of a portion of the cutting unit 1 according to the embodiments illustrated in Fig. 2 - Fig. 5, wherein the portion comprises the first cutting member 4, the pivot axis Pa of the first cutting member 4, and the stop assembly 5 of the first cutting member 4. In Fig. 6, the cross section is made in a plane comprising the pivot axis Pa of the first cutting member 4.

Below, simultaneous reference is made to Fig. 1 - Fig. 6, if not indicated otherwise. According to the illustrated embodiments, each of the pivot axis Pa of the first cutting member 4 and the pivot axis Pa' of the second cutting member 4' is parallel to the rotation axis Ax of the cutting unit 1. In other words, the cross section of Fig. 6 is made in a plane parallel to the rotation axis Ax of the cutting unit 1. However, according to further embodiments, each of the pivot axis Pa of the first cutting member 4 and the pivot axis Pa' of the second cutting member 4' may be substantially parallel to the rotation axis Ax of the cutting unit 1. In this context, the wording substantially parallel may imply that the angle between the rotation axis Ax of the cutting unit 1 and each of the pivot axis Pa of the first cutting member 4 and the pivot axis Pa' of the second cutting member 4' is less than 25 degrees or is less than 15 degrees.

As seen in Fig. 6, according to the illustrated embodiments, the first cutting member 4 is attached to the cutting disc 3 using a screw 41 and a nut 43. In more detail, according to the illustrated embodiments, the screw 41 is inserted through a through hole of the first cutting member 4 and through a through hole of the cutting disc 3. The through hole of the cutting disc 3 is located relatively close to the peripheral edge 13 of the cutting disc 3. In this context, the wording relatively close may imply that the through hole of the cutting disc 3 is located less than 4 cm, or less than 2 cm, from the peripheral edge 13 of the cutting disc 3.

According to the illustrated embodiments, a head of the screw 41 faces towards a ground surface Gs when the cutting unit 1 is attached to a lawnmower 2 and the lawnmower 2 is positioned in an upright use position on the ground surface Gs as is illustrated in Fig. 1. Moreover, the nut 43 is attached to the screw 41 at an opposite side of the cutting disc 3 as compared to the head 41 of the screw 41 and as compared to the first cutting member 4 of the cutting unit 1.

According to the illustrated embodiments, a centre axis of the screw 41 coincides with the pivot axis Pa of the first cutting member 4. This is because according to the illustrated embodiments, the interface between the through hole of the first cutting member 4 and the screw 41 forms the pivot axis Pa of the first cutting member 4. According to further embodiments, the first cutting member 4 may be freely pivotably attached to the cutting disc 3 in another manner and the first cutting member 4 may be attached to the cutting disc 3 using another type of fastening element than a screw 41, such as a bolt, a rivet, or the like.

As mentioned, the stop assembly 5 of the first cutting member 4 can be seen in more detail in Fig. 6. According to the illustrated embodiments, the stop assembly 5 comprises a stop element 6 arranged on the cutting disc 3 at a distance d1 from the pivot axis Pa of the first cutting member 4. The stop element 6 may comprise a screw or a bolt attached in a through hole of the cutting disc 3. The distance d1 may be measured between the pivot axis Pa of the first cutting member 4 and a centre axis Ca of the stop element 6.

As can be seen in Fig. 4 and Fig. 5, according to the illustrated embodiments, the stop assembly 5 of the first cutting member 4 is configured to stop pivoting movement of the first cutting member 4 when the first cutting member 4 reaches the retracted position by an abutting contact between the stop element 6 and a first portion p1 of the first cutting member 4. The first portion p1 of the first cutting member 4 is also indicated in Fig. 3.

Moreover, as mentioned, according to the illustrated embodiments, the second cutting member 4' is identical to the first cutting member 4. Moreover, the second cutting member 4' is attached in the same manner to the cutting disc 3 as the first cutting member 4. Furthermore, the stop assembly 5' of the second cutting member 4' comprises the same design, features, functions, and advantages as the stop assembly 5 of the first cutting member 4 explained herein.

The following is however explained for reasons of completeness. The stop assembly 5' of the second cutting member 4' comprises a stop element 6' arranged on the cutting disc 3 at a distance from the pivot axis Pa' of the second cutting member 4'. The stop element 6' may comprise a screw or a bolt attached in a through hole of the cutting disc 3. The distance may be measured between the pivot axis Pa' of the second cutting member 4' and a centre axis of the stop element 6'.

As can be seen in Fig. 5, according to the illustrated embodiments, the stop assembly 5' of the second cutting member 4' is configured to stop pivoting movement of the second cutting member 4' when the second cutting member 4' reaches the retracted position by an abutting contact between the stop element 6' and a first portion p1' of the second cutting member 4'. The first portion p1' of the second cutting member 4' is also indicated in Fig. 3 and Fig. 4.

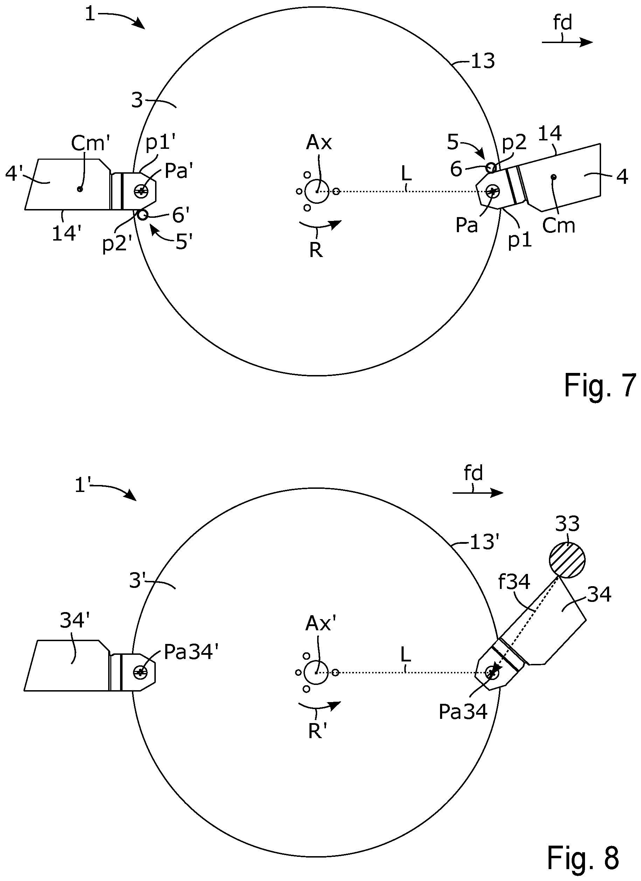

**Fig. 7** illustrates the cutting unit 1 according to the embodiments illustrated in Fig. 2 - Fig. 6 in which the first cutting member 4 has been pivoted to a forwardly inclined position. As is further explained in the following, according to the illustrated embodiments, each of the first and second cutting members 4, 4' is freely pivotably arranged around the pivot axis Pa, Pa' between the cutting position and a forwardly inclined position.

As can be seen when comparing Fig. 3 and Fig. 7, the first cutting member 4 is configured to pivot around the pivot axis Pa in a pivoting direction coinciding with the rotational direction R of the cutting disc 3 upon pivoting from the cutting position illustrated in Fig. 3 to the forwardly inclined position illustrated in Fig. 7.

Moreover, as can be seen in Fig. 7, according to the illustrated embodiments, the stop assembly 5 of the first cutting member 4 is configured to stop pivoting movement of the first cutting member 4 when the first cutting member 4 reaches the forwardly inclined position. In more detail, according to the illustrated embodiments, the stop assembly 5 of the first cutting member 4 is configured to stop pivoting movement of the first cutting member 4 when the first cutting member 4 reaches the forwardly inclined position by an abutting contact between the stop element 6 and a second portion p2 of the cutting member 4. The second portion p2 of the first cutting member 4 is also indicated in Fig. 3 - Fig. 5.

As mentioned, according to the illustrated embodiments, the stop assembly 5' of the second cutting member 4' comprises the same design, features, functions, and advantages as the stop assembly 5 of the first cutting member 4 explained herein. Accordingly, the stop assembly 5' of the second cutting member 4' is configured to stop pivoting movement of the second cutting member 4' when the second cutting member 4' reaches the forwardly inclined position. In more detail, according to the illustrated embodiments, the stop assembly 5' of the second cutting member 4' is configured to stop pivoting movement of the second cutting member 4' when the second cutting member 4' reaches the forwardly inclined position by an abutting contact between the stop element 6' and a second portion p2' of the cutting member 4. The second portion p2' of the second cutting member 4' is also indicated in Fig. 3 - Fig. 5.

According to the illustrated embodiments, the angle between the cutting position and the forwardly inclined position of each of the first and second cutting members 4, 4' is approximately 15 degrees. In line with the above, this means that each of the first and second cutting members 4, 4' pivots an angle of approximately 15 degrees relative to the cutting disc 3 upon pivoting from the cutting position to the forwardly inclined position.

According to further embodiments, the angle between the cutting position and the forwardly inclined position of each of the first and second cutting members 4, 4' may be within the range of 3 - 25 degrees or may be within the range of 10 - 20 degrees. In this manner, a cutting unit 1 is provided having conditions for avoiding situations in which a cutting member 4, 4' gets jammed against a hard object in a manner preventing further rotation of the cutting disc 3 around the rotation axis Ax, which is further explained in the following.

**Fig. 8** illustrates an operating example of a prior art cutting unit 1'. The prior art cutting unit 1' comprises two cutting members 34, 34' and lacks any stop assemblies for the cutting members 34, 34'. Therefore, each of the two cutting members 34, 34' is free to pivot more than 360 degrees around a respective pivot axis Pa34, Pa34' relative to a cutting disc 3' of the prior art cutting unit 1'.

In the operating example of the prior art cutting unit 1' illustrated in Fig. 8, the cutting disc 3' is assumed to rotate in a rotational direction R' around a rotation axis Ax'. Moreover, in the operating example of the prior art cutting unit 1' illustrated in Fig. 8, a cutting member 34 is oriented at an angle relative to the cutting disc 3' where it gets jammed against a hard object 33. Due to the orientation of the cutting member 34 relative to the cutting disc 3', a significant force f34 arises between the cutting member 34 and the hard object 33. The significant force f34 points in a direction straight towards a pivot axis Pa34 of the cutting member 34 which prevents further rotation of the cutting disc 3' of the prior art cutting unit 1'. When this occurs, the cutting member 34 often suffers severe damage, breaks into pieces, or becomes detached from the cutting disc 3', due to the inertia of the rotating cutting disc 3'.

However, as is evident from Fig. 7, due to the stop assemblies 5, 5' of the cutting unit 1, a cutting unit 1 is provided having conditions for avoiding situations in which a cutting member 4, 4' gets jammed against a hard object in a manner preventing further rotation of the cutting disc 3. As a further result, severe damage of the cutting members 4, 4' and of the cutting disc 3 can be avoided.

The following is explained with simultaneous reference to Fig. 1 - Fig. 7. As mentioned, according to the illustrated embodiments, the cutting unit 1 comprises two cutting members 4, 4' each provided with a stop assembly 5, 5' for limiting movement of the cutting member 4, 4' at predetermined angles of the cutting member 4, 4' relative to the cutting disc 3. In embodiments in which the cutting unit 1 comprises another number of cutting members 4, 4', each cutting member 4, 4' of the cutting unit 1 may be associated with a stop assembly 5, 5' configured to stop pivoting movement of the cutting member 4, 4' at predetermined angles relative to the cutting disc 3 according to the above described.

According to some embodiments, the control arrangement 21 of the lawnmower 2 may be configured to accelerate the cutting unit 1 at a set acceleration rate upon startup of a cutting session. The set acceleration rate may be adapted to ensure that each cutting member 4, 4' of the cutting unit 1 is moved from a retracted position to a cutting position during the acceleration of the cutting unit 1.

As seen for example in Fig. 5, if the cutting disc 3 is at standstill and is accelerated in the rotational direction R, the inertia of the cutting members 4, 4' pivots the cutting members 4, 4' relative to the cutting disc 3 from the respective retracted position which causes the centre of mass Cm, Cm' of the cutting members 4, 4' to pass the respective line L, L' between the pivot axis Pa, Pa' of the cutting member 4, 4' and the rotation axis Ax of the cutting unit 1. Then, the centripetal force acting on the cutting members 4, 4' during the continued rotation of the cutting disc 3 ensures that the cutting members 4, 4' reaches the respective cutting position, as is for example illustrated in Fig. 3.

According to some embodiments of the cutting unit 1, the diameter of the cutting disc 3 of the cutting unit 1 is within the range of 5 cm to 39 cm, or is within the range of 8 cm to 20 cm.

According to some embodiments, the length of each of the first and second cutting members 4, 4', as measured from the respective pivot axis Pa, Pa' to an outer edge of the cutting member 4, 4', is within the range of 2 - 16 cm, or is within the range of 6 cm to 12 cm.

According to some embodiments, the maximum attainable tangential velocity of the cutting member 4, 4' of the cutting unit 1 is within the range of 10 to 80 metres per second or is within the range of 15 to 50 metres per second during operation of the lawnmower 2.

According to some embodiments, the set rotational speed of the cutting unit 1 is within the range of 1 000 to 8 500 revolutions per minute or is within the range of 2 000 to 7 200 revolutions per minute.

All of the above distances and measurements may be measured in the cutting plane PC of the cutting unit 1, i.e. in a plane perpendicular to the rotation axis Ax of the cutting unit 1.

According to some embodiments, the lawnmower 2 is arranged such that a kinetic energy of each cutting member 4, 4' of the cutting unit 1 is below 90 Joules, or is below 20 Joules, during operation of the lawnmower 2.

Moreover, according to some embodiments, the lawnmower 2 is arranged such that a kinetic energy of each cutting member 4, 4' is within the range of 1 - 90 Joules or is within the range of 2 - 20 Joules during operation of the lawnmower 2.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A cutting unit (1) for a lawnmower (2), wherein the cutting unit (1) comprises a cutting disc (3) configured to rotate around a rotation axis (Ax) during operation of the lawnmower (2) and a cutting member (4, 4') freely pivotably arranged on the cutting disc (3) around a pivot axis (Pa, Pa') between a cutting position and a retracted position,
wherein the cutting member (4, 4') is configured to assume the cutting position by the centripetal force acting on the cutting member (4, 4') upon rotation of the cutting disc (3) around the rotation axis (Ax),
wherein the cutting unit (1) comprises a stop assembly (5, 5') configured to stop pivoting movement of the cutting member (4, 4') when the cutting member (4, 4') reaches the retracted position, and
wherein the angle between the cutting position and the retracted position is more than 180 degrees.

2. The cutting unit (1) according to claim 1, wherein the centre of mass (Cm, Cm') of the cutting member (4, 4') is located outside of a peripheral edge (13) of the cutting disc (3) when the cutting member (4, 4') is in the cutting position, and is located inside of the peripheral edge (13) of the cutting disc (3) when the cutting member (4, 4') is in the retracted position.

3. The cutting unit (1) according to claim 1 or 2, wherein the centre of mass (Cm, Cm') of the cutting member (4, 4') passes a line (L, L') extending between the rotation axis (Ax) and the pivot axis (Pa, Pa') when the cutting member (4, 4') is pivoted from the cutting position to the retracted position.

4. The cutting unit (1) according to any one of the preceding claims, wherein the angle between the cutting position and the retracted position is within the range of 182 - 235 degrees or is within the range of 185 - 225 degrees.

5. The cutting unit (1) according to any one of the preceding claims, wherein the stop assembly (5, 5') comprises a stop element (6, 6') arranged on the cutting disc (3) at a distance (d1) from the pivot axis (Pa, Pa') of the cutting member (4, 4'), and wherein the stop assembly (5, 5') is configured to stop pivoting movement of the cutting member (4, 4') when the cutting member (4, 4') reaches the retracted position by an abutting contact between the stop element (6, 6') and a first portion (p1, p1') of the cutting member (4, 4').

6. The cutting unit (1) according to any one of the preceding claims, wherein the cutting member (4, 4') is freely pivotably arranged around the pivot axis (Pa, Pa') between the cutting position and a forwardly inclined position, and wherein the stop assembly (5, 5') is configured to stop pivoting movement of the cutting member (4, 4') when the cutting member (4, 4') reaches the forwardly inclined position.

7. The cutting unit (1) according to claim 6, wherein the angle between the cutting position and the forwardly inclined position is within the range of 3 - 25 degrees or is within the range of 10 - 20 degrees.

8. The cutting unit (1) according to claim 5 and any one of the claims 6 or 7, wherein the stop assembly (5, 5') is configured to stop pivoting movement of the cutting member (4, 4') when the cutting member (4, 4') reaches the forwardly inclined position by an abutting contact between the stop element (6, 6') and a second portion (p2) of the cutting member (4, 4').

9. A lawnmower (2) comprising a cutting unit (1) according to any one of the preceding claims and a motor (m) configured to rotate the cutting unit (1) around the rotation axis (Ax) during operation of the lawnmower (2).

10. The lawnmower (2) according to claim 9, wherein the lawnmower (2) is a self-propelled robotic lawnmower.
